# EUROPEAN PATENT SPECIFICATION

(11) **EP 2 683 017 B1**
(45) Date of publication and mention of the grant of the patent: **16.09.2015**
(21) Application number: 11859672.5
(22) Date of filing: 28.02.2011
(51) Int. Cl.: H01M 10/12, H01M 2/04, H01M 2/12

(54) **LEAD STORAGE BATTERY AND METHOD FOR MANUFACTURING SAME**
BLEIAKKUMULATOR UND VERFAHREN ZU SEINER HERSTELLUNG
BATTERIE D'ACCUMULATEURS AU PLOMB ET PROCÉDÉ POUR SA FABRICATION

(43) Date of publication of application: 08.01.2014
(73) Proprietor: GS Yuasa International Ltd., Kisshoin, Minami-ku, Kyoto-shi, Kyoto 601-8520 (JP)
(72) Inventor: IWASE, Shinji, Kyoto-shi, Kyoto 601-8520 (JP); ABE, Ryoji, Kyoto-shi, Kyoto 601-8520 (JP)
(74) Representative: Isarpatent
(86) International application number: PCT/JP2011/054519
(87) International publication number: WO 2012/117502

(56) References cited:
- WO-A1-2010/035407
- JP-A- 5 021 089
- JP-A- 2003 257 404
- JP-A- 2005 353 324
- JP-A- 2006 210 257
- JP-A- 2008 235 055
- JP-A- 2008 262 864
- JP-A- 2009 193 693
- US-A- 4 214 045
- US-A- 4 338 383
- US-A- 5 422 199

## Description

### TECHNICAL FIELD

The present invention relates to a method for manufacturing a lead-acid battery and a the same.

### BACKGROUND ART

As a conventional valve regulated lead-acid battery, as disclosed in Patent Document 1 and Patent Document 2, there is a battery which includes a container divided into a plurality of cell compartments, a container lid (middle lid) sealing an upper opening of the container, exhaust valves (control valves) to open or close in response to internal pressure in the cell compartments, which are located in the container lid to correspond to the respective cell compartments, and an upper lid sealing a space above the exhaust valves. The valve regulated lead-acid battery is constructed in a manner to lead the gas from the exhaust (control) valves throughout the space formed between the container lid and the upper lid and release it collectively through a filter.

In the valve regulated lead-acid battery, each exhaust valve consists of a cap-type rubber valve and a valve seat portion which is molded integrally with the container lid in a way that the mentioned cap-type rubber valves are fitted together by insertion. Valve opening pressures of the valve regulated lead-acid battery which is constructed in this manner need to be inspected to assure the normal operation of the exhaust valve at the stage of manufacturing it.

However, the inspection of the valve opening pressures of the exhaust valves needs to be carried out after the cap-type rubber valve bodies are fitted together by insertion in the valve seat portions. Then, the inspection of the valve opening pressures of the exhaust valves is followed to inspect the whole container lid in which the exhaust valves are inserted or to inspect the whole lead-acid battery, if the container lid is fixed to the container, which makes the inspection task very difficult and reduces its workability and also requires another working space. Moreover, if the inspection of the valve opening pressures is conducted after the container lid is fixed to the container, another problem will arise that their inspection itself becomes difficult..

As disclosed in Patent Document 3, there is a type of lead-acid battery in which vent plugs with control valves to open in response to changes in internal pressures inside battery are mounted in a container lid. The electrolyte filling openings are formed at the container lid of the lead-acid battery, which correspond to respective cells and through which electrolyte or water is filled into the cell compartments, and the vent plugs are mounted in the electrolyte filling openings. In the vent plugs, exhaust holes are formed through which gas emitted from the control valves can be released outside the battery.

When the container lid constructed in this manner is applied to a valve regulated lead-acid battery, it is necessary to prevent gas inside the cells from releasing through paths other than the control valves and the exhaust holes of the vent plugs, and therefore airtightness needs to be secured between the electrolyte filling openings and the vent plugs when the vent plugs are mounted in the electrolyte filling openings.

### PRIOR ART DOCUMENTS

### PATENT DOCUMENTS

Patent Document 1: JP-A-2005-353324
Patent Document 2: JP-A-2008-262864
Patent Document 3: JP-A-2008-34167

### SUMMARY OF THE INVENTION

### PROBLEMS TO BE SOLVED BY THE INVENTION

The present invention has solved once for all the above-described problems and its main objects of which aim not only to make inspections of operating pressures of exhaust valves easy and accuracy of the operating pressures of the exhaust valves improved but also make reliability of mounting of vent plugs increased by carrying out inspections with the vent plugs being mounted and quality of a valve regulated lead-acid battery with a collective exhaust vent structure more advanced.

### MEANS FOR SOLVING THE PROBLEMS

According to the present invention, there is provided a method for manufacturing a lead-acid battery as defined in independent claim 1.

With this method, the operating pressure inspecting process, the vent plug mounting process, the mounting state inspecting process, and the upper lid attaching process are carried out in this order and therefore the inspections of the operating pressures of the exhaust valves become easier to be done and accuracy of the operating pressures of the mounted exhaust valves can be improved. Consequently, the manufacturing method according to the present invention is an optimal one for manufacturing a valve regulated lead-acid battery.

In this invention, by carrying out the operating pressure inspecting process, it is possible to sort the vent plugs by use of both measured values of valve opening pressure and valve closing pressure of the exhaust valve. As a result, it is possible to select the vent plugs within a normal range of valve opening pressures while discarding the vent plugs having valve opening pressures out of the specified range. The operating pressure inspecting process can be followed by the vent plug mounting process, which makes the inspection task easy and workability improved, and also a required working space reduced in comparison of the case that the inspection process is carried out after the vent plugs are mounted to the container lid. Therefore, it is possible to enhance accuracy of the inspection without substantially increasing the cost for the inspection. This effect is especially beneficial for mass production of the lead-acid batteries.

In this invention, airtightness between the vent plug and the container lid can be inspected at the mounting state inspecting process, which can make reliability of mounting of the vent plugs improved. Carrying out of the mounting state inspecting process can contribute to make an increased percentage of the normally mounted vent plugs among ones mounted in the container lid. The normally mounted vent plug is confirmed to operate at a predetermined valve opening pressure, because the airtightness between the vent plug and the container lid is secured. If the mounting state is detected not to be normal, the vent plug mounting process is carried out again so as to mount the vent plug normally. Because the mounting state inspecting process is followed by the upper lid attaching process, the inspection task is extremely easier than the case that the inspecting process is carried out after the upper lid attaching process.

In this invention, both carrying out of the operating pressure inspecting process and the mounting state inspecting process contribute to make control of the operating pressures of the exhaust valves more reliable. Therefore, if the invention is applied to the valve regulated lead-acid battery, a valve regulated lead-acid battery with extremely high performance can be manufactured. Because variability of the valve opening pressures and the valve closing pressures among a plurality of lead-acid batteries can be reduced, the invention is optimal to mass production, which therefore contributes to improve quality of the valve regulated lead-acid battery with a collective exhaust vent structure.

Preferably, at the same time as the operating pressure inspecting process is carried out by 100% inspection of the vent plugs, the mounting state inspecting process is carried out by random inspection of the container lids mounted with the vent plugs. In this way, lead-acid batteries with high quality can be manufactured efficiently by applying 100% inspection of the vent plugs which can discard every defective, and additionally by random inspection of mounting states of the mounted vent plugs which improper mounting is less likely assumed to occur.

In order to make a manufacturing process of the lead-acid battery more simplified, both the vent plug mounting process and the mounting state inspecting process are preferably carried out simultaneously.

At the vent plug mounting process where the vent plugs are engaged by screwing with internal thread portions of electrolyte filling openings formed at the container lid, as in a case where the vent plug mounting process and the mounting state inspecting process are carried out simultaneously, torque regulation can be assumed to be conducted during tightening the vent plug into the internal thread portion at the electrolyte filling opening. As a result, by tightening the vent plug into the internal thread portion with over the predetermined value of torque, both the vent plug mounting process and the mounting state inspecting process can be done simultaneously.

As a specific embodiment of carrying out the mounting state inspecting process, at the above-described vent plug mounting process, the vent plugs are engaged by screwing with the internal thread portions of the electrolyte filling openings formed at the container lid, meanwhile the mounting state inspecting process is preferably carried out by turning round in an opposite direction to a tightening direction the vent plugs, which are screwed with the internal thread portion. Specifically, it is inspected whether or not torque value of turning the vent plug mounted to the internal thread portion in the opposite direction (unscrewing direction) to the tightening direction is higher than a predetermined one (e.g., a value which is slightly smaller than the tightening torque.) If the torque is measured smaller than the predetermined value in this inspection, the tightening is detected to be improper and the following process will feed back to the mounting process. In this manner, since workability of turning round the vent plugs in the opening direction is expected to be extremely high, the mounting state inspecting process can be conducted easily.

At the upper lid attaching process, the upper lid is preferably fixed to the container lid so as not to be removable. In this way, it is possible to substantially eliminate events for users to touch the vent plugs. As a result, the users cannot maintain the fabricated lead-acid battery to increase safety of the user.

A lead-acid battery appropriately manufactured by the above-described manufacturing method is characterized by comprising: the container divided into a plurality of cell compartments; the container lid for sealing the upper opening of the container; a plurality of the vent plugs which are mounted in the container lid to correspond to the respective cell compartments and incorporating the exhaust valves to open or close in response to the internal pressures of the cell compartments; and the upper lid which seals the upper space above a plurality of vent plugs and contains the exhaust opening vent for releasing gas emitted from the plurality of vent plugs, to outside. The vent plugs are removable and fixed to the container lid meanwhile the upper lid is fixed to the container lid so as not to be removable. Here, what the vent plugs are detachable is defined that they can be screwed or unscrewed freely. What the upper lid is not removable means it can be attached, but once it is attached, it cannot be removed unless it is forced to be broken to be removed.

With this lead-acid battery, by installing the removable vent plugs in the upper lid from which they cannot be removable, it is possible to appropriately carry out the operating pressure inspecting process, the vent plug mounting process, and the mounting state inspecting process in the manufacturing factory. At the same time, because the upper lid cannot be removed by users after the manufacture, safety of a user can be assured. The lead-acid battery according to the present invention can be manufactured by carrying out a set of processes where the operating pressure inspecting process, the vent plug mounting process, the mounting state inspecting process, and the upper lid sealing process are conducted in this order. Therefore, reduced variability of the operating pressures of a plurality of the vent plugs can contribute to manufacture a valve regulated lead-acid battery with high performance.

The upper lid is preferably fused to the container lid by thermal weld as a mean of keeping airtightness between the upper lid and the container lid in order to lead entirely the gas emitted from the vent plugs to the exhaust opening vent without leakage.

Preferably, a tool engagement portion with which a mounting tool of mounting the vent plug in the container lid is engaged is formed at an upper portion of each of the vent plugs, meanwhile the shape of the above-mentioned tool engagement portion of vent plugs is adapted to engage a shape of the mounting tool, both when an operation of screwing the vent plug in the container lid and an operation of unscrewing the vent plug are carried out respectively. In this way, both the vent plug mounting process and the mounting state inspecting process can be conducted by using the same mounting tool.

Preferably, a tool engagement portion, with which a mounting tool of screwing the vent plug in the container lid is engaged, is formed at an upper portion of each of the vent plugs. The shape of the above-mentioned tool engagement portion of vent plugs is adapted to engage with a shape of the mounting tool when conducting an operation of screwing the vent plug in the container lid, meanwhile the shape of the tool engagement portion of the vent plug is preferably not adapted to engage a shape of the unscrewing tool when conducting an operation of unscrewing the vent plug from the container lid. In this way, even if the vent plug happens to be outside, the operation of unscrewing the vent plug cannot be carried out and therefore the level of security of users can still remain high.

In order to make a structure of lead-acid battery more simplified as well as to reduce the number of parts, the vent plugs and the container lid are preferably airproof and sealed with a single seal member.

In order to prevent the electrolyte leaked out of the vent plugs from leaking outside through the exhaust opening vent in the upper lid, a plurality of flow path walls are preferably placed between the container lid and the upper lid by which electrolyte leaked from the vent plugs need to pass through a roundabout path to the exhaust opening vent from the vent plugs.

### ADVANTAGES OF THE INVENTION

The present invention with the above-described framework makes not only the inspections of the operating pressures of the exhaust valves easy and the accuracy of the valve opening pressures and/or the valve closing pressures of the exhaust valves improved, but also makes accuracy of airtightness increased by inspecting the mounting states of the vent plugs, which can contribute to improve quality of a valve regulated lead-acid battery with a collective-exhaust vent structure.

### BRIEF DESCRIPTION OF THE DRAWINGS

Fig. 1 is a perspective view schematically showing a structure of a valve regulated lead-acid battery manufactured according to an embodiment.
Fig. 2 is a plan view of the valve regulated lead-acid battery according to the embodiment.
Fig. 3 is a cross-sectional view showing a structure of a vent plug manufactured according to the embodiment.
Fig. 4 is a perspective view showing the structure of the vent plug manufactured according to the embodiment.
Fig. 5 is a bottom view and a cross-sectional view showing a structure of an upper lid manufactured according to the embodiment.
Fig. 6 is a partially-enlarged cross-sectional view showing a filter and an exhaust opening vent in the upper lid manufactured according to the embodiment.
Fig. 7 is a flowchart showing an example of a method for manufacturing the valve regulated lead-acid battery according to the embodiment.
Fig. 8 is a perspective view showing a structure of a vent plug according to a variation.

### MODE FOR CARRYING OUT THE INVENTION

A valve regulated lead-acid battery (VRLA) manufactured according to the present invention will be described below with reference to the drawings.

A valve regulated lead-acid battery 100 according to the embodiment is one which is mounted to a vehicle and used for example and is one with six-cell monoblock container. The six-cell monoblock battery is described in this embodiment but the invention can be also applied to twelve-cell monoblock battery and the like and the number of cells is not especially restricted.

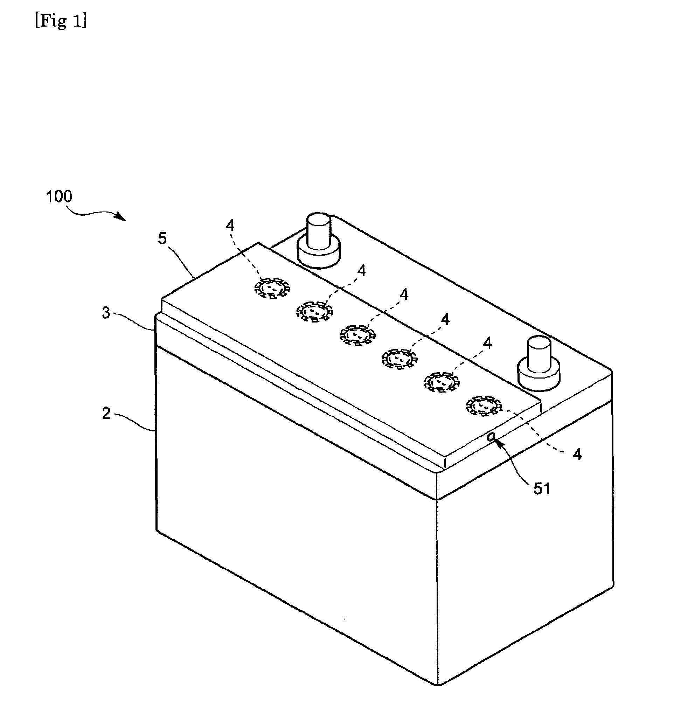

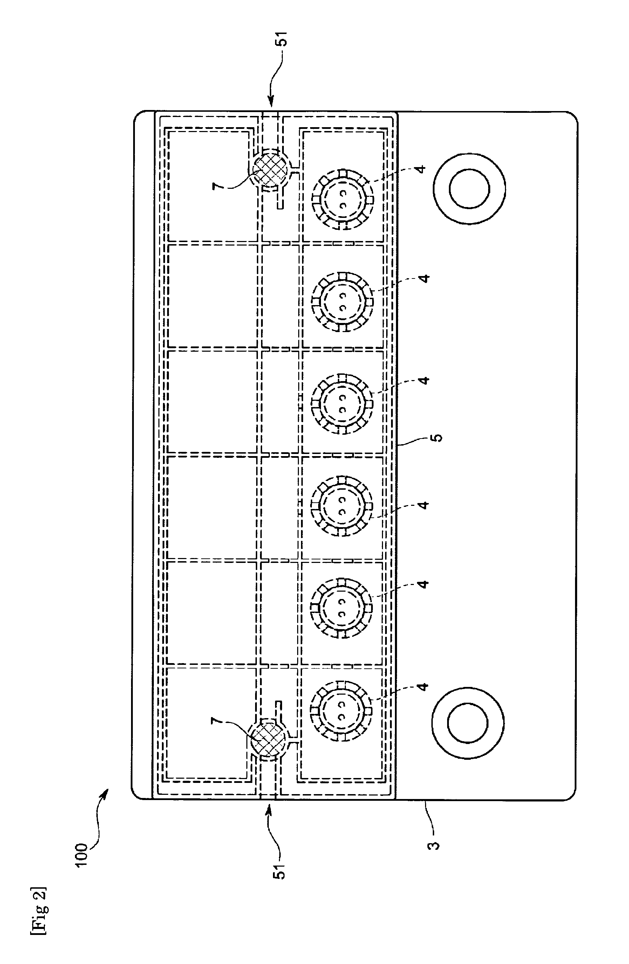

Specifically, as shown in Figs. 1 and 2, the valve regulated lead-acid battery 100 includes a container 2 in a shape of a roughly rectangular parallelepiped divided into six cell compartments by five partitions placed parallel to each other, a container lid 3 in a roughly rectangular plate shape for sealing an upper opening of the container 2, six vent plugs 4 installed in the container lid 3 to correspond to the respective cell compartments, and an upper lid 5 for collectively sealing upper space above the vent plugs 4. In the respective cell compartments of the container 2, element of plate groups and electrolyte of dilute sulfuric acid (not shown) are put in respectively.

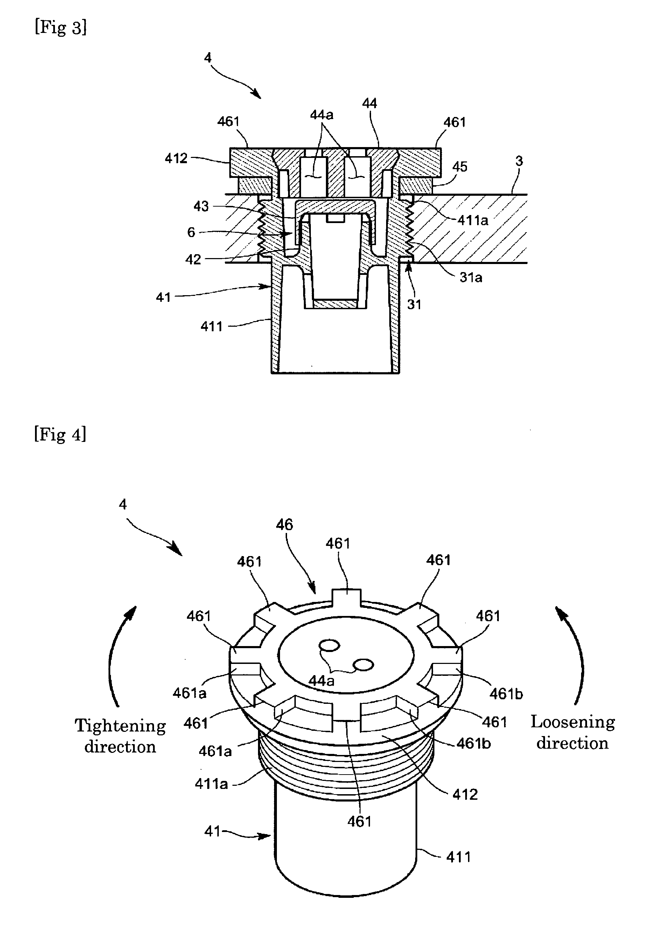

As shown in Figs. 3 and 4, each of the vent plugs 4 includes an exhaust valve 6 which opens or closes in response to an internal pressure of the corresponding cell compartments and consists of a vent plug main body 41 in a roughly cylindrical shape, a valve seat portion 42 placed inside an inner peripheral face of the vent plug main body 41 and formed in a roughly cylindrical shape along a direction of a rotation axis, a cap-type rubber valve element 43 attached to an upper opening of the valve seat portion 42, and a lid body 44 inserted to the vent plug main body 41 above the rubber valve element 43. The valve seat portion 42 and the rubber valve element 43 constitute the exhaust valve 6.

The vent plug main body 41 includes a cylindrical portion 411 inserted into an electrolyte filling opening 31 placed in the container lid 3 to correspond to each of the cell compartments and a flange portion 412 provided at an upper portion of the cylindrical portion 411. On an outer peripheral face of the cylindrical portion 411, an external thread portion 411a is formed to be engaged by screwing with an internal thread portion 31a formed on an inner peripheral face of the electrolyte solution filling opening 31. In this manner, the external thread portion 411a of the vent plug main body 41 is engaged by screwing with the internal thread portion 31a in the electrolyte filling opening 31, and thus the vent plug 4 is freely removed and fixed to the container lid 3.

On a under surface of the flange portion 412, a single seal member 45 is set to assure an airproof sealing between the under surface of the flange portion 412 and a top surface of the container lid 3. The seal member 45 plays a function of the airtight sealing between the under surface of the flange portion 412 and the top surface of the container lid 3, when the external thread portion 411a of the vent plug main body 41 is engaged by screwing with the internal thread portion 31a in the electrolyte filling opening 31 (see Fig. 3). Because the vent plug 4 and the electrolyte filling opening 31 are mounted airtightly by using the single seal member 45, the number of parts can be reduced and a structure of the lead-acid battery 100 can be simplified. Furthermore, the lid body 44 is fixed to the upper opening of the vent plug main body 41, and exhaust holes 44a are formed in the lid body 44 for releasing the gas emitted from the exhaust valve 6 to outside of the vent plug 4. A lower end face of the lid body 44 is preferably located at a predetermined distance from an upper end face of the rubber valve element 43 so as to prevent the rubber valve element 43 from coming off the valve seat portion 42.

At the upper portion of the vent plug 4, specifically on a top face of the flange portion 412 of the vent plug 4, a tool engagement portion 46 is formed with which a mounting tool (not shown) for mounting the vent plug 4 in the container lid 3 is engaged. As particularly shown in Fig. 4, the tool engagement portion 46 is constructed by a plurality of engagement protrusions 461 placed at equal intervals in a circumferential direction on the top face of the flange portion 412. Because the engagement protrusions 461 project upward with respect to the flange portion 412, the tool can be engaged with and disengaged from the engagement protrusions 461 when the tool is moved up and down in a vertical direction. The operation of moving the tool in the vertical direction is done more easily than that of horizontal movement in a right-left direction or a front-back direction, because there are fewer obstructions such as a side wall of the electrolyte filling opening 31 in case of the vertical movement. The advantage of fewer obstructions such as the side wall of the electrolyte filling opening 31 makes it possible to employ a design where upper faces of the engagement protrusions 461 do not project from the top face of the container lid 3 and beneficially results in to the reduced height of the container lid 3. Each of the engagement protrusions 461 is formed along a radial direction and consists a tightening engagement face 461a engaged with the mounting tool when vent plug 4 is turned round in a tightening direction to screw with the internal thread portion 31a and a loosening engagement face 461b engaged with the mounting tool when vent plug 4 is turned round in a loosening direction to remove from the internal thread portion 31a. The tightening engagement face 461a is a side face formed roughly perpendicular to the tightening direction and the loosening engagement face 461b is a side face formed roughly perpendicular to the loosening direction.

The upper lid 5 covers and seals the upper space above a plurality of vent plugs 4 and contains filters 7 through which the gas emitted from the exhaust holes 44a of the plurality of vent plugs 4 is collectively released to the outside. The upper lid 5 is fixed to the upper face of the container lid 3 to be airproof and cannot be removable and, specifically, fixed to the upper face of the container lid 3 by thermal weld.

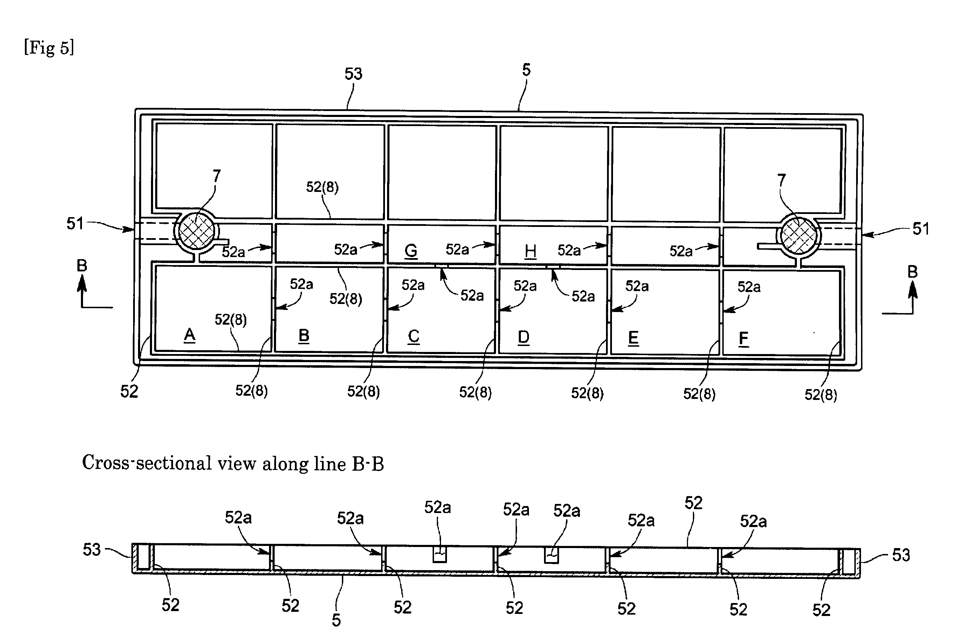

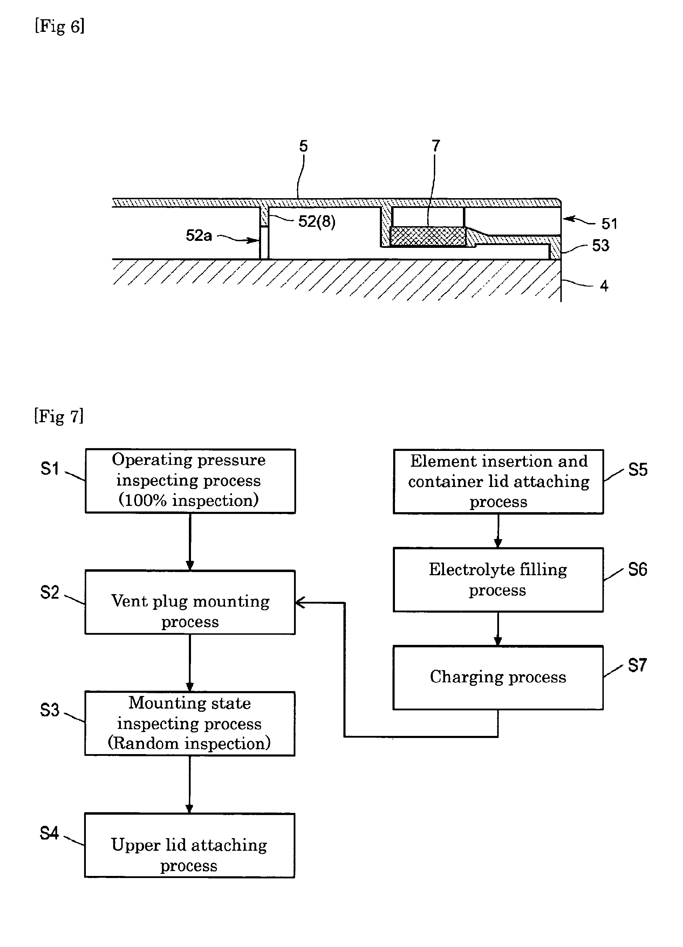

Specifically, as shown in Figs. 5 and 6, the upper lid 5 has a roughly rectangular shape extending along a direction of arrangement of the vent plugs 4, where exhaust opening vents 51 are formed so as to release the gas from the vent plugs 4 to the outside in both right and left lateral side, and the filters 7 are located upstream of the exhaust opening vents 51. As shown in Fig. 6, each of the filters 7 is located at a certain distance upward from the top face of the container lid 3 so that the gas emitted from the vent plugs 4 passes through the filters 7 upward from a bottom side to reach the exhaust opening vents 51. In this way, the gas from the vent plugs 4 is released outside but the electrolyte leaked from the vent plugs 4 is hard to pass out through the filters 7.

As shown in Fig. 5, the upper lid 5 includes a plurality of flow path walls 8 between the container lid 3 and the upper lid 5 by which electrolyte leaked from the vent plugs 4 will pass through a roundabout path to the exhaust opening vents 51 from the vent plugs 4. The flow path walls 8 in the embodiment are formed by partition walls 52 which surround peripheries of the respective vent plugs 4 and compartment the respective vent plug 4. As for the partition wall 52, communication holes 52a are formed which connect the adjacent compartmented areas each other to lead the gas to the exhaust opening vents 51

Specifically, the partition walls 52 aim to lead the gas emitted from the vent plugs 4 to a central portion and then divide it in the right and left directions of the upper lid 5 and finally guide it to the exhaust opening vents 51 formed in both right and left lateral side. In the embodiment, the partition walls 52 are lattice-shaped along both a longitudinal direction and a short side direction of the upper lid 5 and each of the compartmented areas (A to F) formed for the respective vent plug 4 is in roughly rectangular shape. The communication holes 52a are formed in the partition walls 52 which connect the compartmented areas adjacent to each other (e.g., A and B, B and C) in both the right and left direction (longitudinal direction). Moreover, the communication holes 52a are formed in the partition walls 52 which connect the compartmented areas (C, D) located on a central part and the compartmented areas (G, H) adjacent to each other in the short side direction (vertical direction). If the electrolyte leaked from vent plug4 reach the compartmented areas (G, H), the electrolyte need to get round a plurality of partition walls 52 and the communication holes 52 until arriving at the exhaust opening vents 51. Because the partition walls 52 which play a role of the flow path walls 8 are formed in this manner, the electrolyte leaked from the vent plugs 4 can hardly get out from the exhaust opening vents 51 in the upper lid 5.

Next, a method for manufacturing the valve regulated lead-acid battery 100 constructed in this way will be described with reference to the drawings.

As shown in Fig. 7, the manufacturing method according to the embodiment includes: an operating pressure inspecting process S1 of inspecting the exhaust valves 6 mounted in the vent plugs 4 to inspect operating pressures before the vent plugs 4 are mounted in the container lid 3; a vent plug mounting process S2 of mounting the vent plugs 4 in the container lid 3, in which opening pressures of exhaust valves are confirmed to be in a normal range at the operating pressure inspecting process S1; a mounting state inspecting process S3 to inspect mounting states of the vent plugs 4 mounted in the container lid 3 at the vent plug mounting process S2; and an upper lid attaching process S4 of attaching the upper lid 5 to the container lid 3 when the vent plugs 4 are confirmed to be mounted normally to the container lid 3 in mounting state inspecting process S3.

Before the vent plug mounting process S2, the elements of plate groups are inserted in the respective cell compartments of the container 2 and the container lid 3 is fixed to the upper opening of the container 2 (process S5), and the electrolyte is filled into the respective cell compartments through the electrolyte openings 31 formed at the container lid 3 (process S6). Then, following filling the electrolyte, the elements of the plate groups inside the container lid 3 are charged (process S7). The vent plug mounting process S2 is carried out for the container lid 3 of the lead-acid battery in which the elements of the plate groups are charged. The container lid 3 is fused to the upper opening of the container 2 by thermal weld.

The inspection of the operating pressure at the operating pressure inspecting process S1 is conducted before mounting the vent plug 4 in the container lid 3, where gas such as air are forced to inlet into the vent plug 4 from underneath until the exhaust valve 6 will open and the air pressure at valve opening is measured as an opening gas pressure of the exhaust valve 6. The operating pressure inspecting process S1 is carried out for all the vent plugs 4 before mounting them in the container lid 3. If the valve opening pressure measured here is not within the predetermined normal range, the exhaust valve 6 of the vent plug 4 is detected to a defective and discarded before mounting in the container lid 3. On the other hand, if the measured valve opening pressure is within the predetermined normal range, the exhaust valve 6 of the vent plug 4 is confirmed to be normal and installed in the vent plug 4 mounted in the container lid 3. In the invention, instead of inspecting the valve opening pressures, a process of inspecting valve closing pressures of the exhaust valves 6 can be carried out as the operating pressure inspecting process and thus the exhaust valves 6 with the valve closing pressures in a normal range can be selectively used. In the invention, as well as by carrying out the process of inspecting the valve opening pressures of the exhaust valves 6, by carrying out the process of inspecting the valve closing pressures as the operating pressure inspecting process, it is possible to selectively use the exhaust valves 6 which are within the normal ranges of both the valve opening pressures and the valve closing pressures.

The vent plug mounting process S2 is a process of mounting the vent plugs 4, which exhibits valve opening pressures are confirmed within a normal range, in the electrolyte filling openings 31 at the container lid 3. Specifically, the tool engagement portion 46 formed at the upper portion of the vent plug 4 are engaged with the mounting tool and each of the vent plugs 4 is mounted in the electrolyte filling opening 31 by screwing. At the vent plug mounting process S2, for example, tightening torque of the vent plug 4 can be controlled by using a torque wrench, and then the vent plug 4 is mounted in the container lid 3 by tightening with over the predetermined values of tightening torque.

The mounting state inspecting process S3 is carried out by operating each of vent plugs 4 which are engaged with the internal thread portion 31a in the container lid 3 by screwing, in an opposite direction (loosening direction) to the tightening direction. The mounting state inspecting process S3 is carried out by inspecting by sample the lead-acid batteries in which all the vent plugs 4 are mounted in the container lids 3 at the vent plug mounting process S2. Specifically, for example, reverse torque is measured which is generated when the vent plug 4 is turned in the loosening direction by using the torque wrench, and check whether or not the measured reverse torque is larger than a predetermined value (e.g., a value slightly smaller than the predetermined value of the tightening torque in the vent plug mounting process S2). If the reverse torque is smaller than the predetermined value, the tightening is detected to be insufficient (improper mounting), the process reverses to the vent plug mounting process S2 , and the vent plug 4 which is determined to be defective is tightened again with over the predetermined tightening torque. Meanwhile, if the reverse torque is higher than the predetermined value, the tightening is confirmed to be sufficient and the process goes up to the next upper lid attaching process S4.

The upper lid attaching process S4 is carried out by fusing and fixing the partition walls 52 of the upper lid 5 to the upper face of the container lid 3 by thermal weld as well as by fusing and fixing a side peripheral wall 53 (see Figs. 5 and 6) of the upper lid 5 to the upper face of the container lid 3 by thermal weld.

### <Effects of the Embodiment>

According to the embodiment constructed as described above, the operating pressure inspecting process S1, the vent plug mounting process S2, the mounting state inspecting process S3, and the upper lid attaching process S4 are carried out in this order which therefore makes the inspection of the valve opening pressures of the exhaust valves 6 easy and accuracy of the valve opening pressures of the mounted exhaust valves 6 more improved. Moreover, carrying out the inspection of the airtightness of the vent plugs 4 can contribute to improve reliability of mounting of the vent plugs 4. Therefore, the quality of the valve regulated lead-acid battery with a collective-exhaust vent structure100 can be improved by this invention.

By installation of the removable vent plugs 4 into the upper lid 5 which can be not removed, the operating pressure inspecting process S1, the vent plug mounting process S2 and the mounting state inspecting process S3 in the manufacturing factory can be suitably carried out respectively and safety of user is expected to be improved, because the user cannot remove the upper lid 5 after finishing its manufacture.

### <Other Embodiments>

The invention is not restricted to the above-described embodiment.

For example, the vent plug mounting process S2 and the mounting state inspecting process S3 can be carried out simultaneously. Specifically, if the tightening torque in mounting can be controlled in such manner that the tightening torque is not smaller than the predetermined value, when the vent plugs 4 are mounted in the electrolyte filling opening 31 at the container lid 3, which it is expected to make the vent plug mounting process S2 and the mounting state inspecting step S3 carried out simultaneously.

Although the mounting state inspecting process S3 is carried out by inspecting by sample in the above-described embodiment, a 100% inspection can be also carried out.

Furthermore, as for the lead-acid battery charged before the vent plug mounting process S2, temporary plugs are applicable to the electrolyte filling opening 31 in order to avoid contact between the electrolyte and the outside air.

In the above-mentioned embodiment, the vent plugs 4 are mounted in the container lid 3 which is fixed to the container 2. However, before the container lid 3 is fixed to the container 2, the vent plugs 4 can be mounted in the electrolyte solution openings 31 at the container 2 and then the container lid 3 can be fixed to the container 2.

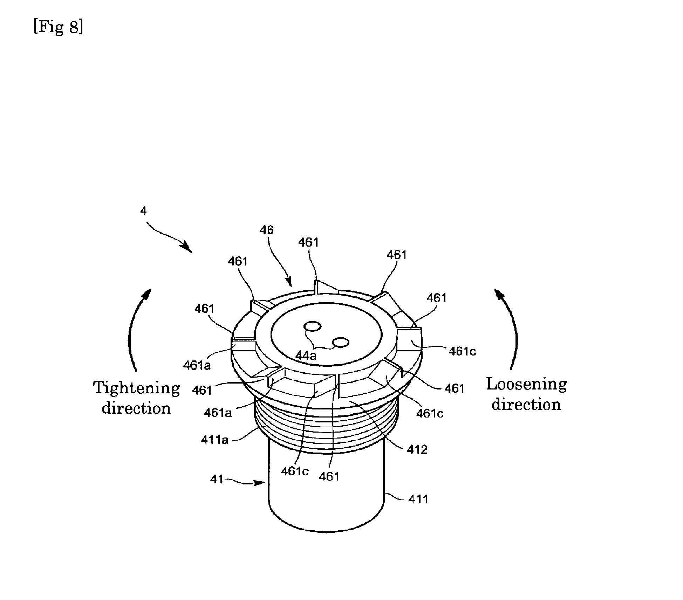

Furthermore, as shown in Fig. 8, the tool engagement portion 46 formed at the upper portion of each of the vent plugs 4 in the above-mentioned embodiment can also have such a shape that each of the engagement protrusions 461 includes a tightening engagement face 461a which is engaged with the mounting tool when the mounting tool is turned round in a direction of engaging the vent plug 4 with the internal thread portion 31a by screwing, and a slip face 461c which is not engaged with the mounting tool but slips on when the mounting tool is turned round in a direction of unscrewing the vent plug 4 from the internal thread portion 31a. The slip face 461c is in shape of an inclined face tilted to the unscrewing direction. In this way, the vent plug 4 mounted in the electrolyte filling opening 31 becomes hard to be removed. This vent plug 4 can be optimally used when the vent plug mounting process S2 and the mounting state inspecting process S3 are carried out simultaneously.

Moreover, the flow path walls 8 in the embodiment can be labyrinth of flow path walls as well as the partition walls 52 formed in the lattice shape, which are not especially limited, if the flow paths of the leaked electrolyte will comprise a certain roundabout path from the vent plugs 4 to the exhaust opening vents. Although the flow path walls 8 are formed in the upper lid 5 in the above-mentioned embodiment, they can be also formed on the upper face of the container lid 3 or can be formed both in the upper lid 5 and on the upper face of the container lid 3 respectively.

Needless to say, the invention is not limited to the above-described embodiments and can be applicable in various ways if it will not extend beyond the scope of its purpose.

### INDUSTRIAL APPLICABILITY

The present invention makes not only the inspection of the operating pressures of the exhaust valves easy and the accuracy of the valve opening pressures of the exhaust valves improved but also the reliability of mounting of the vent plugs improved and the quality of the valve regulated lead-acid battery with a collective-exhaust vent structure enhanced by carrying out inspections of airtightness of the vent plugs.

### DESCRIPTION OF REFERENCE SIGNS

- 100: LEAD-ACID BATTERY
- 2: CONTAINER
- 3: CONTAINER LID
- 31a: INTERNAL THREAD PORTION
- 4: VENT PLUG
- 6: EXHAUST VALVE
- 45: SEAL MEMBER
- 46: TOOL ENGAGEMENT PORTION
- 5: UPPER LID
- 51: EXHAUST OPENING VENT
- 7: FILTER
- 8: FLOW PATH WALL

## Claims

1. A method for manufacturing a lead-acid battery including: a container divided into a plurality of cell compartments; a container lid for sealing an upper opening of the container; a plurality of vent plugs which are mounted in the container lid to correspond to the respective cell compartments and incorporating exhaust valves to open or close in response to internal pressures in the cell compartments; and an upper lid for sealing an upper space above the plurality of vent plugs in which exhaust opening vents are formed so as to release gas emitted from the plurality of vent plugs, to outside, the method comprising:
a vent plug mounting process of mounting the vent plugs in the container lid, after conducting an operating pressure inspecting process of inspecting operating pressures of the exhaust valves;
a mounting state inspecting process of inspecting mounting states of the vent plugs mounted in the container lid at the vent plug mounting process; and
an upper lid attaching process of attaching the upper lid to the container lid, when the vent plugs are confirmed to be normally mounted in the container lid at the mounting state inspecting process;
wherein in the upper lid attaching process, the upper lied is fixed to the container lid so as not to be removable.

2. The method for manufacturing the lead-acid battery according to claim 1,
wherein the operating pressure inspecting process is carried out by 100% inspection of the vent plugs and the mounting state inspecting process is carried out by random inspection of the container lids mounted with the vent plugs.

3. The method for manufacturing the lead-acid battery according to claim 1,
wherein the vent plug mounting process and the mounting state inspecting process are carried out simultaneously.

4. The method for manufacturing the lead-acid battery according to claim 1,
wherein in the vent plug mounting process, the vent plugs are mounted by being screwed to internal thread portions of electrolyte filling openings formed at the container lid and the mounting state inspecting process is carried out by operation of turning around each of the vent plugs screwed to the internal thread portion by screwing in an opposite direction to a tightening direction.

## Patentansprüche

1. Verfahren zum Herstellen einer Blei-Säure-Batterie, die Folgendes umfasst: einen Behälter, der in mehrere Zellenabteile unterteilt ist; einen Behälterdeckel zum Versiegeln einer oberen Öffnung des Behälters; mehrere Entlüftungsstopfen, die so in dem Behälterdeckel montiert sind, dass sie den jeweiligen Zellenabteilen entsprechen, und Auslassventile aufweisen, um in Reaktion auf Innendrücke in den Zellenabteilen zu öffnen und zu schließen; und einen oberen Deckel zum Versiegeln eines oberen Raums über den mehreren Entlüftungsstopfen, in dem Abgasentlüftungsöffnungen ausgebildet sind, um Gas, das von den mehreren Entlüftungsstopfen abgegeben wird, ins Freie abzulassen, wobei das Verfahren Folgendes umfasst:
einen Entlüftungsstopfenmontageprozess zum Montieren der Entlüftungsstopfen in dem Behälterdeckel nach Ausführung eines Betriebsdruckinspektionsprozesses zum Inspizieren von Betriebsdrücken der Auslassventile;
einen Montagezustandsinspektionsprozess zum Inspizieren von Montagezuständen der Entlüftungsstopfen, die beim Entlüftungsstopfenmontageprozess in dem Behälterdeckel montiert wurden; und
einen Oberdeckelbefestigungsprozess zum Befestigen des oberen Deckels an dem Behälterdeckel, wenn beim Montagezustandsinspektionsprozess bestätigt wurde, dass die Entlüftungsstopfen normal in dem Behälterdeckel montiert wurden;
wobei im Oberdeckelbefestigungsprozess der obere Deckel so an dem Behälterdeckel fixiert wird, dass er nicht mehr abgenommen werden kann.

2. Verfahren zum Herstellen der Blei-Säure-Batterie nach Anspruch 1, wobei der Betriebsdruckinspektionsprozess mit 100 % Inspektion der Entlüftungsstopfen ausgeführt wird und der Montagezustandsinspektionsprozess durch eine Stichprobeninspektion der Behälterdeckel, in welche die Entlüftungsstopfen montiert sind, ausgeführt wird.

3. Verfahren zum Herstellen der Blei-Säure-Batterie nach Anspruch 1, wobei der Entlüftungsstopfenmontageprozess und der Montagezustandsinspektionsprozess gleichzeitig ausgeführt werden.

4. Verfahren zum Herstellen der Blei-Säure-Batterie nach Anspruch 1, wobei beim Entlüftungsstopfenmontageprozess die Entlüftungsstopfen montiert werden, indem sie in Innengewindeabschnitte von Elektrolyteinfüllöffnungen eingeschraubt werden, die in dem Behälterdeckel ausgebildet sind, und der Montagezustandsinspektionsprozess ausgeführt wird, indem jeder der in den Innengewindeabschnitt eingeschraubten Entlüftungsstopfen herumgedreht wird, indem er in eine der Festziehrichtung entgegengesetzte Richtung geschraubt wird.

## Revendications

1. Procédé de fabrication d'une batterie au plomb-acide comprenant : un récipient divisé en une pluralité de compartiments de cellules ; un couvercle de récipient pour fermer hermétiquement une ouverture supérieure du récipient ; une pluralité de bouchons d'aération qui sont montés dans le couvercle de récipient pour correspondre aux compartiments de cellules respectifs et comportant des soupapes d'échappement pour l'ouverture ou la fermeture en réponse à des pressions internes dans les compartiments de cellules ; et un couvercle supérieur pour fermer hermétiquement un espace supérieur au-dessus de la pluralité de bouchons d'aération dans lesquels des évents d'ouverture d'échappement sont formés de manière à libérer le gaz émis à partir de la pluralité de bouchons d'aération, vers l'extérieur, le procédé comprenant :
un processus de montage de bouchons d'aération consistant à monter les bouchons d'aération dans le couvercle du récipient, après avoir effectué un processus d'inspection de pression de fonctionnement consistant à inspecter les pressions de fonctionnement des soupapes d'échappement ;
un processus d'inspection d'état de montage consistant à inspecter des états de montage des bouchons d'aération montés dans le couvercle de récipient au niveau du processus de montage d'aération ; et
un processus de fixation de couvercle supérieur consistant à fixer le couvercle supérieur au couvercle du récipient, lorsque les bouchons d'aération sont confirmés comme étant normalement montés dans le couvercle de récipient au niveau du processus d'inspection d'état de montage ;
dans lequel dans le processus de fixation de couvercle supérieur, le couvercle supérieur est fixé au couvercle de récipient de manière à ne pas être amovible.

2. Procédé de fabrication d'une batterie au plomb-acide selon la revendication 1, dans lequel le processus d'inspection de pression de fonctionnement est exécuté par l'intermédiaire d'une inspection à 100 % des bouchons d'aération et le processus d'inspection d'état de montage est exécuté par l'intermédiaire d'une inspection aléatoire des couvercles de récipient montés avec les bouchons d'aération.

3. Procédé de fabrication d'une batterie au plomb-acide selon la revendication 1, dans lequel le processus de montage de bouchons d'aération et le processus d'inspection d'état de montage sont exécutés simultanément.

4. Procédé de fabrication d'une batterie au plomb-acide selon la revendication 1, dans lequel dans le processus de montage de bouchons d'aération, les bouchons d'aération sont montés par vissage aux parties de filetage interne d'ouvertures de remplissage en électrolyte formées au niveau du couvercle de récipient et le processus d'inspection d'état de montage est effectué par l'intermédiaire d'une opération consistant à tourner chacun des bouchons d'aération vissés à la partie de filetage interne par vissage dans une direction opposée à une direction de serrage.
